(19) Europäisches Patentamt / European Patent Office / Office européen des brevets

(11) EP 3 221 375 B1

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **15795204.5**

(22) Anmeldetag: **18.11.2015**

(51) Int Cl.:
***C08G 18/48*** (2006.01) ***C08G 18/76*** (2006.01)
***C08K 5/00*** (2006.01) ***C08K 5/523*** (2006.01)

(86) Internationale Anmeldenummer:
**PCT/EP2015/076955**

(87) Internationale Veröffentlichungsnummer:
**WO 2016/079175 (26.05.2016 Gazette 2016/21)**

# (54) VERFAHREN ZUR HERSTELLUNG VON FLAMMGESCHÜTZTEN POLYURETHANSCHAUMSTOFFEN UNTER VERWENDUNG VON HALOGENFREIEN FLAMMSCHUTZMITTELN

METHOD FOR PRODUCING FLAME-RETARDANT POLYURETHANE FOAM MATERIALS USING HALOGEN-FREE FLAME RETARDANTS

PROCÉDÉ DE FABRICATION DE MOUSSES DE POLYURÉTHANE IGNIFUGES EN UTILISANT DES MOYENS IGNIFUGES SANS HALOGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2014 EP 14193606**

(43) Veröffentlichungstag der Anmeldung:
**27.09.2017 Patentblatt 2017/39**

(73) Patentinhaber: **Covestro Deutschland AG**
**51373 Leverkusen (DE)**

(72) Erfinder:
- **MEYER-AHRENS, Sven**
**51375 Leverkusen (DE)**
- **REITER, Stephan**
**40764 Langenfeld (DE)**
- **CAVLAN, Engin**
**51147 Köln (DE)**
- **GOSSNER, Matthäus**
**51061 Köln (DE)**

(74) Vertreter: **Levpat**
**c/o Covestro AG**
**Gebäude 4825**
**51365 Leverkusen (DE)**

(56) Entgegenhaltungen:
**US-A1- 2006 116 432**
**US-A1- 2014 179 811**
**US-B1- 6 242 631**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 221 375 B1

## Beschreibung

Gegenstand der vorliegenden Erfindung betrifft ein Verfahren zur Herstellung von flammgeschützten Polyurethanschaumstoffen, insbesondere von Polyurethanweichschaumstoffen, unter Verwendung von halogenfreien Flammschutzmitteln, wobei die resultierenden flammgeschützten Polyurethanschaumstoffe niedrige Emissionswerte bei guten mechanischen Eigenschaften aufweisen. Weiterer Gegenstand der vorliegenden Erfindung sind halogenfreie Flammschutzmittel.

Aus dem Stand der Technik ist eine Vielzahl unterschiedlicher Flammschutzmittel bekannt und kommerziell erhältlich. Häufig werden halogenhaltige Alkylphosphate als Flammschutzmittel wie beispielsweise Tris(chlorethyl)phosphat, Tris(chlorisopropyl)phosphat und Tris(2,3-dichloroisopropyl)phosphat bei der Herstellung von flammgeschützten Polyurethanweichschaumstoffen eingesetzt. Diese halogenhaltigen Flammschutzmittel werden von Polyurethan (PUR)-Verarbeitern und Endverbrauchern zunehmend kritisch beurteilt und der Halogengehalt im Endprodukt wird z.T. durch Gütesiegel Dritter (Produktlabel) begrenzt. Zudem führen die o.g. Flammschutzmittel auch zu erhöhten Emissionswerten der resultierenden Polyurethanschaumstoffe

Weiterhin können als halogenfreie Flammschutzmittel in Polyurethanschaumstoffen Alkylphosphate (z.B. Triethylphosphat), Arylphosphate (z.B.Diphenylkresylphosphat) und Alkylphosphonate (z.B. Dimethylpropanphosphonat) eingesetzt werden. Diese Verbindungen sind zwar flüssig und weisen daher eine gute Verarbeitbarkeit bei der Herstellung des Polyurethanschaumstoffs auf, haben aber aufgrund ihrer relativ niedrigen Molekulargewichte ebenfalls eine relativ hohe Flüchtigkeit, was sich negativ auf die Emissionswerte der resultierenden Polyurethanschaumstoffe auswirkt.

Für spezielle Anwendungen wie z.B. für die Verwendung von Polyurethanschaumstoffen in der Automobil-Innenausstattung wird gefordert, dass die Emissionen flüchtiger organischer Verbindungen (Volatile Organic Compounds, VOC) und / oder die kondensierbaren Emissionen (Fogging) aus diesen Polyurethanschaumstoffen niedrige Grenzwerte nicht überschreiten sollen.

Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden. Die Automobilindustrie fordert typischerweise, dass das Foggingkondensat nach der Methode DIN 75 201 B weniger als 1 mg betragen darf.

Weiterhin bekannt sind die sogenannten "reaktiven Flammschutzmittel", die gegenüber Isocyanatgruppen reaktive Hydroxylgruppen tragen und so mit dem zur Schaumstoffherstellung eingesetztem Polyisocyanat reagieren und in das Polyurethan eingebaut werden. Daher zeigen diese Schaumstoffe nur geringe VOC- und Fogging-Beiträge. Hierunter gibt es sowohl halogenhaltige, als auch halogenfreie phosphorhaltige Flammschutzmittel. Diese weisen jedoch wegen ihrer (OH)-Funktionalität zum Teil erhebliche Probleme bei der Schaumstoffherstellung auf, da sie die Vernetzungsdichte der PUR-Matrix erhöhen. Mechanische Eigenschaften und / oder die Verarbeitbarkeit der flüssigen Komponenten zum fertigen Schaum werden nachteilig beeinflusst, sodass die reaktiven Flammschutzmittel nur in begrenztem Umfang in der Rezeptur verwendet werden können.

Stand der Technik sind auch feste, meist halogenfreie Flammschutzmittel wie Melamin, Aluminium- oder Magnesiumoxid oder Ammoniumpolyphosphate. Feste Flammschutzmittel benötigen spezielle Dosiereinrichtungen, verschlechtern die Schaumstoffeigenschaften und erhöhen die Viskosität des Reaktionsgemisches erheblich, was wiederum zu unerwünschten Lufteinschlüssen und Fließlinien im Schaum führen kann.

EP-A 0170206 offenbart ein Verfahren zur Herstellung von flammgeschützten Polyurethanschaumstoffen. Als geeignete Flammschutzmittel werden Triarylphosphorsäureester offenbart. Die resultierenden Polyurethanschaumstoffe weisen eine geringe Verfärbung der Außenhaut auf (skin staining).

EP-A 1785439 offenbart 2-Hydroxyalkanphosphonate und/oder 3-Hydroxyalkanphosphonate als halogenfreie Flammschutzmittel in Polyurethanschaumstoffen. Über die mechanischen Eigenschaften der resultierenden Polyurethane wird nichts mitgeteilt. Es wird aber darauf hingewiesen, dass auch die reaktiven monofunktionellen Flammschutzmittel mit den grundsätzlichen Nachteilen der reaktiven Flammschutzmittel, wenn auch in abgeschwächter Form, behaftet sind. Dem Fachmann ist bekannt, dass monofunktionelle Additive einen Kettenabbruch im PUR-Netzwerk bewirken und daher die mechanischen Eigenschaften des resultierenden Schaums (ebenfalls) beeinträchtigen.

US-A 2014/0179811 offenbart die Verwendung von gemischt C1-C5 alkylierten Triarylphosphaten mit maximal zwei unsubstituierten Phenolresten, die weniger als 1 Gew.-% Triphenylphosphat enthalten, basierend auf die Gesamtmenge von eingesetzten alkylierten Triarylphosphaten zur Herstellung von flammgeschützten Polyurethan- oder Polyisocyanuratschaumstoffen. US-A 2014/0179811 offenbart keine Lehre in Bezug auf die Flüchtigkeit der beschriebenen Flammschutzmittel oder der mit diesen hergestellten Polyurethane. Ziel ist vielmehr die Vermeidung von Triphenylphosphat welchem in der Schrift nachteilige Umwelteigenschaften nachgesagt werden.

Die stetig steigenden Anforderungen an emissionsarme Polyurethanschaumstoffe, insbesondere an Polyurethanweichschaumstoffe, in speziellen Anwendungen wie beispielsweise in der Automobil-Innenausstattung, machen die Verwendung von speziellen halogenfreien Flammschutzmitteln bei der Herstellung von Polyurethanschaumstoffen erforderlich.

Die Aufgabe der vorliegenden Erfindung war daher die Bereitstellung eines Verfahrens zur Herstellung von

flammgeschützten Polyurethanschaumstoffen, insbesondere Polyurethanweichschaumstoffen, unter Verwendung von halogenfreien Flammschutzmitteln, wobei die resultierenden Polyurethanschaumstoffe geringe Fogging-Werte gemäß DIN 75201 B aufweisen. Die Gesamtemission gemäß VDA 278, in der die Summe an leicht flüchtigen Substanzen (VOC-Wert) und der schwerer flüchtigen Substanzen (FOG-Wert) bestimmt wird, sollte in den resultierenden PUR-Schaumstoffen ebenfalls niedrig sein.
Diese Aufgabe wurde gelöst durch ein Verfahren zur Herstellung von Polyurethanschaumstoffen durch Umsetzung einer Komponente enthaltend

a) mindestens eine gegenüber Isocyanaten reaktionsfähige Wasserstoffatome aufweisende Verbindung,
b) Wasser und/oder physikalisches Treibmittel,
c) Hilfs- und Zusatzstoffe,
d) mindestens ein halogenfreies Flammschutzmittel umfassend

d.1) einen Phosphorsäureester der Formel (I)

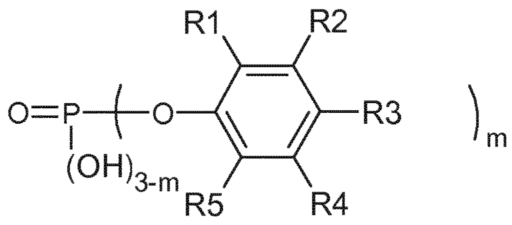

(I)

worin

m eine ganze Zahl von 1 bis 3 ist,
$R_1$, $R_2$, $R_3$, $R_4$, $R_5$ jeweils unabhängig von einander für H, einen $C_6$- bis $C_{12}$-Arylrest, vorzugsweise $C_6$-Arylrest, einen $C_2H_2Ph$-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen, und/oder $COOR_{11}$ mit $R_{11}$ = $C_1$- bis Cs-Alkylrest, vorzugsweise $C_1$- bis $C_3$-Alkylrest, besonders bevorzugt $C_1$-Alkylrest, steht, und wobei mindestens einer der Reste $R_1$, $R_2$, $R_3$, $R_4$, $R_5$ verschieden von H ist,

oder
d.2) einen Phosphorsäureester der Formel (II)

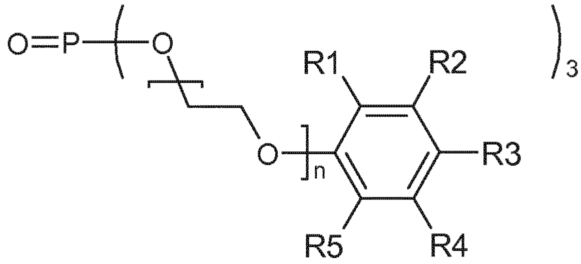

(II)

worin

n für eine ganze Zahl von 1 bis 4, vorzugsweise von 1 bis 2, besonders bevorzugt von 1,
$R_6$, $R_7$, $R_8$, $R_9$, $R_{10}$ jeweils unabhängig von einander für H, einen geradkettigen, verzweigten oder cyclischen $C_1$- bis $C_{10}$- Alkylrest, vorzugsweise $C_1$- bis $C_6$- Alkylrest, einen $C_6$- bis $C_{12}$-Arylrest, vorzugsweise $C_6$-Arylrest, einen $C_2H_2Ph$-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen, und/oder $COOR_{11}$ mit $R_{11}$ = $C_1$- bis

Cs-Alkylrest, vorzugsweise $C_1$- bis $C_3$-Alkylrest, besonders bevorzugt $C_1$-Alkylrest, steht,

mit e) mindestens einem Di- und/oder Polyisocyanat,

wobei die Mischung frei von halogenhaltigen Flammschutzmitteln ist.

In einer Ausführungsform des Verfahrens werden Komponente a) in einer Menge 100 Gew.Teilen, Komponente b) in einer Menge von 0,5 bis 25 Gew.-Teilen (je 100 Gew.-Teile a) (=parts per hundred parts: pphp)), Komponente c) in einer Menge von 0,05 bis 10 pphp , und Komponente d) in einer Menge von 1 bis 30 pphp eingesetzt.

Weiterer Gegenstand der Anmeldung sind Flammschutzmittel umfassend

d.1) einen Phosphorsäureester der Formel (I)

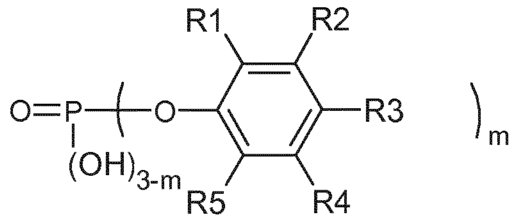

(I)

worin

m eine ganze Zahl von 1 bis 3 ist,

$R_1$, $R_2$, $R_3$, $R_4$, $R_5$ jeweils unabhängig von einander für H, einen $C_6$- bis $C_{12}$-Arylrest, vorzugsweise $C_6$-Arylrest, einen $C_2H_2Ph$-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen, und/oder $COOR_{11}$ mit $R_{11}$ = $C_1$- bis $C_5$-Alkylrest, vorzugsweise $C_1$- bis $C_3$-Alkylrest, besonders bevorzugt $C_1$-Alkylrest, steht, und wobei mindestens einer der Reste $R_1$, $R_2$, $R_3$, $R_4$, $R_5$ verschieden von H ist,

oder

d.2) einen Phosphorsäureester der Formel (II)

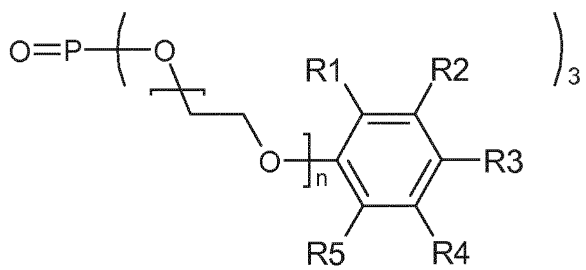

(II)

worin

n für eine ganze Zahl von 1 bis 4, vorzugsweise von 1 bis 2, besonders bevorzugt von 1,

$R_6$, $R_7$, $R_8$, $R_9$, $R_{10}$ jeweils unabhängig von einander für H, einen geradkettigen, verzweigten oder cyclischen $C_1$- bis $C_{10}$- Alkylrest, vorzugsweise $C_1$- bis $C_{6-}$ Alkylrest, einen $C_{6-}$ bis $C_{12}$-Arylrest, vorzugsweise $C_{6-}$ Arylrest, einen $C_2H_2Ph$-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen, und/oder $COOR_{11}$ mit $R_{11}$ = $C_1$- bis Cs-Alkylrest, vorzugsweise $C_1$- bis $C_3$-Alkylrest, besonders bevorzugt $C_1$-Alkylrest, steht,

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als Polyurethanweichschaumstoffe vor und können als Form- oder auch als Blockschaumstoffe, vorzugsweise als Blockschaumstoffe, hergestellt werden. Gegenstand der Erfindung sind daher ein Verfahren zur Herstellung der flammgeschützten Polyurethanschaumstoffe, die nach diesen Verfahren hergestellten flammgeschützten Polyurethanschaumstoffe, die nach diesen Verfahren hergestellten flammgeschützten Polyurethanweichblockschaumstoffe bzw. flammgeschützten Polyurethanweichformschaumstoffe, sowie die Verwendung der flammgeschützten Polyurethanweichschaumstoffe.

Im Folgenden sind die im erfindungsgemäßen Verfahren eingesetzten Komponenten näher beschrieben.

Komponente a)

Verbindungen gemäß Komponente a) sind Verbindungen mit gegenüber Isocyanaten reaktionsfähigen Wasserstoffatomen mit einer Hydroxyl-Zahl (OH-Zahl) gemäß DIN 53240 von ≥ 5 mg KOH/g bis ≤ 250 mg KOH/g, vorzugsweise von ≥ 9 mg KOH/g bis ≤ 112 mg KOH/g, besonders bevorzugt von ≥ 28 mg KOH/g bis ≤ 60 mg KOH/g.

Die Herstellung der Verbindungen gemäß Komponente a) erfolgt in an sich bekannter Weise durch Addition von Alkylenoxiden an Starterverbindungen mit gegenüber Isocyanaten reaktionsfähigen Wasserstoffatomen unter Basenkatalyse oder durch Einsatz von Doppelmetallcyanidverbindungen (DMC-Verbindungen). Die Starterverbindungen weisen meist Funktionalitäten von 2 bis 8, vorzugsweise von 2 bis 6, besonders bevorzugt von 3 auf und sind vorzugsweise hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3 Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte (Polyetherpolyole) Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Die Funktionalität der Polyetherpolyole wird durch die Funktionalität der zu der Herstellung der Polyetherpolyole eingesetzten Starterverbindungen bestimmt.

In einer Ausführungsform der Erfindung weist die Komponente a) eine Hydroxyl-Zahl (OH-Zahl) gemäß DIN 53240 von ≥ 5 mg KOH/g bis ≤ 250 mg KOH/g, vorzugsweise von ≥ 9 mg KOH/g bis ≤ 112 mg KOH/g, besonders bevorzugt von ≥ 28 mg KOH/g bis ≤ 60 mg KOH/g auf, eine Hydroxyl-Funktionalität von 2 bis 8, vorzugsweise von 2 bis 6, besonders bevorzugt von 2 bis 3 auf. Vorzugsweise werden Propylenoxid und/oder Ethylenoxid einzeln, im Gemisch oder nacheinander bei der Additionsreaktion von Alkylenoxid an geeignete Starterverbindungen zugeführt.

In einer bevorzugten Ausführungsform weist Komponente a) eine OH-Zahl gemäß DIN 53240 von ≥ 28 mg KOH/g bis ≤ 60 mg KOH/g auf, eine Hydroxyl-Funktionalität von 2 bis 3 und einen Anteil von ≥ 75 Gew.-%, vorzugsweise ≥ 85 Gew.-%, besonders bevorzugt ≥ 95 Gew.-% Propylenoxid auf.

Komponente b)

Als Komponente b) werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente c)

Als Komponente c) werden Hilfs- und Zusatzstoffe verwendet wie

c.1) Katalysatoren (Aktivatoren),
c.2) oberflächenaktive Zusatzstoffe (Tenside), wie Emulgatoren und übliche Schaumstabilisatoren
c.3) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, ggf. weitere Flammschutzmittel, Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren c.1) werden besonders bevorzugt

c.1.1) Harnstoff, Derivate des Harnstoffs und/oder
c.1.2) Zinn-Katalysatoren, bevorzugt Dibutylzinnoxid, Dibutylzinndilaurat, Zinnoctoat, besonders bevorzugt Zinnoctoat und/oder
c.1.3) tertiäre Amine (beispielsweise 1,4-Diaza(2,2,2)bicyclooctan), aliphatische Aminoether (beispielsweise Dimethylaminoethylether).

<u>Komponente d)</u>

Erfindungsgemäß wird mindestens ein halogenfreies Flammschutzmittel umfassend

d.1) ein Phosphorsäureester der Formel (I)

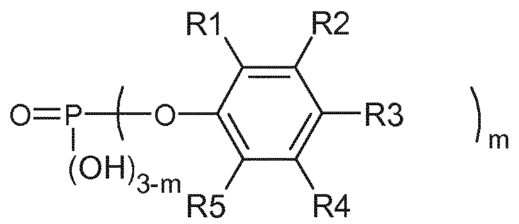

(I)

worin

m eine ganze Zahl von 1 bis 3 bedeutet,
$R_1$, $R_2$, $R_3$, $R_4$, $R_5$ jeweils unabhängig von einander für H, einen $C_6$- bis $C_{12}$-Arylrest, vorzugsweise $C_6$-Arylrest, einen $C_2H_2$Ph-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen, und/oder $COOR_{11}$ mit $R_{11}$ = $C_1$- bis Cs-Alkylrest, vorzugsweise $C_1$- bis $C_3$-Alkylrest, besonders bevorzugt $C_1$-Alkylrest, steht, und wobei mindestens einer der Reste $R_1$, $R_2$, $R_3$, $R_4$, $R_5$ verschieden von H ist,

oder
d.2) ein Phosphorsäureester der Formel (II)

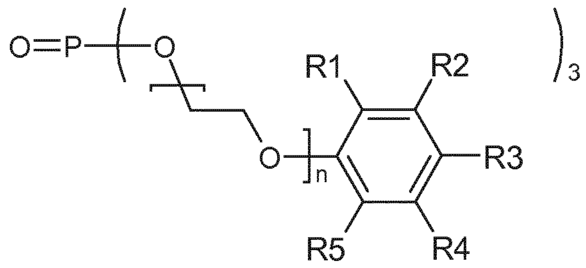

(II)

worin n für eine ganze Zahl von 1 bis 4, vorzugsweise von 1 bis 2, besonders bevorzugt von 1, $R_6$, $R_7$, $R_8$, $R_9$, $R_{10}$ jeweils unabhängig von einander für H, einen geradkettigen, verzweigten oder cyclischen $C_1$- bis $C_{10}$- Alkylrest, vorzugsweise $C_1$- bis $C_6$- Alkylrest, einen $C_6$- bis $C_{12}$-Arylrest, vorzugsweise $C_{6-}$ Arylrest, einen $C_2H_2$Ph-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$-Kohlenstoffatomen, und/oder $COOR_{11}$ mit $R_{11}$ = $C_1$- bis Cs-Alkylrest, vorzugsweise $C_1$- bis $C_3$-Alkylrest, besonders bevorzugt $C_1$-Alkylrest, steht, eingesetzt.

In einer Ausführungsform umfasst d) eine Komponente d.1) gemäß Formel (I), wobei m = 3 ist, einer der Reste $R_1$, $R_2$, $R_3$, $R_4$ oder $R_5$ ein $C_6$- bis $C_{12}$-Arylrest, bevorzugt $C_6$-Arylrest, oder $C_2H_2$Ph-Rest ("Styryl") ist und die verbleibenden Reste für ein H-Atom stehen, oder wobei m eine ganze Zahl von 1 bis 3 ist und $R_1$, $R_3$ und $R_5$ gleich sind und für einen $C_6$- bis $C_{12}$-Arylrest, bevorzugt $C_6$-Arylrest, oder für $C_2H_2$Ph-Rest ("Styryl") und $R_2$ und $R_4$ für H stehen.

In einer weiteren Ausführungsform umfasst d) eine Komponente d.1) gemäß Formel (I), wobei m = 3 ist, einer der Reste $R_1$, $R_2$, $R_3$, $R_4$ oder $R_5$ ein $C_6$- bis $C_{12}$-Arylrest, bevorzugt $C_6$-Arylrest, oder $C_2H_2$Ph-Rest ("Styryl") ist und die verbleibenden Reste für ein H-Atom stehen, oder wobei m eine ganze Zahl von 1 bis 3 ist und $R_1$, $R_3$ und $R_5$ stehen für $C_2H_2$Ph-Rest ("Styryl") und $R_2$ und $R_4$ für H.

In einer weiteren Ausführungsform umfasst d) eine Komponente d.1) gemäß Formel (I), wobei m = 3 ist, $R_3$ ein $C_6$- bis $C_{12}$-Arylrest, vorzugsweise $C_6$-Arylrest ist und $R_1$, $R_2$, $R_4$ und $R_5$ für H stehen, oder wobei m eine ganze Zahl von 1 bis 3 ist, $R_1$, $R_3$ und $R_5$ sind gleich und für einen $C_6$- bis $C_{12}$-Arylrest, bevorzugt $C_6$-Arylrest, oder $C_2H_2$Ph-Rest ("Styryl") und $R_2$ und $R_4$ für H stehen.

In einer weiteren bevorzugten Ausführungsform umfasst d) eine Komponente d.1) gemäß Formel (I), wobei m eine ganze Zahl von 1 bis 3 ist, $R_1$, $R_3$ und $R_5$ gleich sind und für einen $C_6$- bis $C_{12}$-Arylrest, bevorzugt $C_6$-Arylrest, oder $C_2H_2$Ph-Rest ("Styryl") und $R_2$ und $R_4$ für H stehen.

In einer weiteren bevorzugten Ausführungsform umfasst d) eine Komponente d.1) gemäß Formel (I), wobei m eine ganze Zahl von 1 bis 3 ist, $R_1$, $R_3$ und $R_5$ gleich sind und für $C_2H_2$Ph-Rest ("Styryl") stehen und $R_2$ und $R_4$ stehen für H.

In einer weiteren Ausführungsform umfasst das halogenfreie Flammschutzmittel d) ein Gemisch von Verbindungen d.1) gemäß Formel (I), mit m= 1, m=2 und m=3, $R_1$, $R_3$ und $R_5$ sind gleich und stehen für $C_2H_2$Ph-Rest ("Styryl") und $R_2$, $R_4$ für H,

In einer weiteren Ausführungsform umfasst d) eine Komponente d.1) gemäß Formel (I), wobei m eine ganze Zahl von 1 bis 3 ist, $R_1$, $R_3$ und $R_5$ gleich sind und für $C_2H_2$Ph-Rest ("Styryl") stehen und $R_2$ und $R_4$ stehen für H, wobei die Komponente d.1) als Gemisch von Verbindungen mit m=3 in einer Menge von 20 bis 26 Gew.-%, mit m=2 in einer Menge von 25 bis 35 Gew-% und mit m = 1 in einer Menge von 45 bis 55 Gew.-% vorliegt.

In einer Ausführungsform für d.2) gemäß Formel (II) steht n für eine ganze Zahl von 1 bis 4, vorzugsweise von 1 bis 2, besonders bevorzugt von 1 stehen und einer der Reste $R_6$, $R_7$, $R_8$, $R_9$ oder $R_{10}$ ist ausgewählt aus der Gruppe bestehend aus H, geradkettigen, verzweigten oder cyclischen $C_1$- bis $C_{10}$-Alkylrest, vorzugsweise $C_1$- bis $C_6$- Alkylrest, einen $C_6$- bis $C_{12}$-Arylrest, vorzugsweise $C_6$-Arylrest, einen $C_2H_2$Ph-Rest ("Styryl"), einen O-Alkylrest mit $C_1$ bis Cs-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$-Kohlenstoffatomen, vorzugsweise mit C6- Kohlenstoffatomen oder $COOR_{11}$ mit $R_{11}$ = $C_1$- bis $C_5$-Alkylrest, vorzugsweise $C_1$- bis $C_5$-Alkylrest, besonders bevorzugt $C_1$-Alkylrest und die verbleibenden Reste $R_6$, $R_7$, $R_8$, $R_9$ oder $R_{10}$ stehen für ein H-Atom.

In einer weiteren Ausfuhrungsform für d.2) gemäß Formel (II) steht n für eine ganze Zahl von 1 bis 4, vorzugsweise von 1 bis 2, besonders bevorzugt von 1, einer der Reste $R_6$, $R_7$, $R_8$, $R_9$ oder $R_{10}$ ist ausgewählt aus der Gruppe bestehend aus H, O-Alkylrest mit $C_1$ bis Cs-Kohlenstoffatomen, vorzugsweise mit $C_1$ bis $C_3$-Kohlenstoffatomen, besonders bevorzugt mit $C_1$-Kohlenstoffatomen oder $COOR_{11}$ mit $R_{11}$ = $C_1$- bis $C_5$-Alkylrest, vorzugsweise $C_1$- bis $C_3$-Alkylrest, besonders bevorzugt $C_1$-Alkylrest und die verbleibenden Reste $R_6$, $R_7$, $R_8$, $R_9$ oder $R_{10}$ stehen für ein H-Atom.

In einer bevorzugten Ausführungsform für d.2) gemäß Formel (II) steht n für eine ganze Zahl von 1 bis 4,

vorzugsweise von 1 bis 2, besonders bevorzugt von 1, und die Reste $R_6$, $R_7$, $R_8$, $R_9$ und $R_{10}$ sind gleich und stehen für H.

In einer weiteren bevorzugten Ausführungsform für d.2) gemäß Formel (II) steht n für eine ganze Zahl von 1 und die Reste $R_6$, $R_7$, $R_8$, $R_9$ und $R_{10}$ sind gleich und stehen für H.

In einer Ausführungsform umfasst das halogenfreie Flammschutzmittel d) eine Verbindung d.1) gemäß Formel (I), wobei m = 3 ist, einer der Reste $R_1$, $R_2$, $R_3$, $R_4$ oder $R_5$ ein $C_6$- bis $C_{12}$-Arylrest, bevorzugt $C_6$-Arylrest, oder $C_2H_2$Ph-Rest ("Styryl") ist und die verbleibenden Reste für ein H-Atom stehen, oder wobei m eine ganze Zahl von 1 bis 3 ist und $R_1$, $R_3$ und $R_5$ gleich sind und für einen $C_6$- bis $C_{12}$-Arylrest, bevorzugt $C_6$-Arylrest, oder für einen $C_2H_2$Ph-Rest ("Styryl") und $R_2$ und $R_4$ für H stehen, oder eine Verbindung d.2) gemäß Formel (II), worin n für eine ganze Zahl von 1 bis 4, vorzugsweise von 1 bis 2, besonders bevorzugt von 1 steht, und einer der Reste $R_6$, $R_7$, $R_8$, $R_9$ oder $R_{10}$ ist ausgewählt aus der Gruppe bestehend aus H, geradkettigen, verzweigten oder cyclischen $C_1$- bis $C_{10}$- Alkylrest, vorzugsweise $C_1$- bis $C_6$- Alkylrest, einen $C_6$- bis $C_{12}$-Arylrest, vorzugsweise $C_6$-Arylrest, einen $C_2H_2$Ph-Rest ("Styryl"), einen O-Alkylrest mit $C_1$ bis Cs-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen oder $COOR_{11}$ mit $R_{11}$ = $C_1$- bis Cs-Alkylrest, vorzugsweise $C_1$- bis $C_3$-Alkylrest, besonders bevorzugt $C_1$-Alkylrest und die verbleibenden Reste $R_6$, $R_7$, $R_8$, $R_9$ oder $R_{10}$ stehen für ein H-Atom, eingesetzt.

In einer weiteren Ausführungsform umfasst das halogenfreie Flammschutzmittel d) eine Verbindung d.1) gemäß Formel (I), wobei m eine ganze Zahl von 1 bis 3 ist, $R_1$, $R_3$ und $R_5$ gleich sind und für einen $C_6$-bis $C_{12}$-Arylrest, bevorzugt $C_6$-Arylrest, oder $C_2H_2$Ph-Rest ("Styryl") und $R_2$ und $R_4$ für H stehen, oder eine Verbindung d.2) gemäß Formel (II), worin n für eine ganze Zahl von 1 bis 4, vorzugsweise von 1 bis 2, besonders bevorzugt von 1 steht, einer der Reste $R_6$, $R_7$, $R_8$, $R_9$ oder $R_{10}$ ist ausgewählt aus der Gruppe bestehend aus H, O-Alkylrest mit $C_1$ bis $C_3$-Kohlenstoffatomen, vorzugsweise mit $C_1$ bis $C_3$-Kohlenstoffatomen, besonders bevorzugt mit $C_1$-Kohlenstoffatomen oder $COOR_{11}$ mit $R_{11}$ = $C_1$- bis $C_5$-Alkylrest, vorzugsweise $C_1$- bis $C_3$-Alkylrest, besonders bevorzugt $C_1$-Alkylrest und die verbleibenden Reste $R_6$, $R_7$, $R_8$, $R_9$ oder $R_{10}$ stehen für ein H-Atom.

In einer weiteren Ausführungsform, umfasst das halogenfreie Flammschutzmittel d) eine Verbindung d.1) gemäß Formel (I), wobei m eine ganze Zahl von 1 bis 3 ist, $R_1$, $R_3$ und $R_5$ gleich sind und für $C_2H_2$Ph-Rest ("Styryl") und $R_2$, $R_4$ für H stehen, oder eine Verbindung d.2) gemäß Formel (II), worin n für eine ganze Zahl von von 1 bis 4, vorzugsweise von 1 bis 2, besonders bevorzugt von 1 steht, und die Reste $R_6$, $R_7$, $R_8$, $R_9$ oder $R_{10}$ gleich sind und für ein H-Atom stehen.

In einer weiteren Ausführungsform umfasst das halogenfreie Flammschutzmittel d) ein Gemisch von Verbindungen d.1) gemäß Formel (I), mit m= 1, m=2 und m=3, $R_1$, $R_3$ und $R_5$ sind gleich und stehen für $C_2H_2$Ph-Rest ("Styryl") und $R_2$, $R_4$ für H, oder eine Verbindung d.2) gemäß Formel (II), worin n für eine ganze Zahl von 1 bis 4, vorzugsweise von 1 bis 2, besonders bevorzugt von 1 steht, und die Reste $R_6$, $R_7$, $R_8$, $R_9$ oder $R_{10}$ gleich sind und für ein H-Atom stehen, umfasst.

In einer weiteren Ausführungsform umfasst das halogenfreie Flammschutzmittel d) eine Verbindung d.1) gemäß Formel (I), wobei m eine ganze Zahl von 1 bis 3 ist, $R_1$, $R_3$ und $R_5$ gleich sind und für $C_2H_2$Ph-Rest ("Styryl") stehen und $R_2$, $R_4$ für H stehen, und wobei die Komponente d.1) als Gemisch von Verbindungen mit m=3 in einer Menge von 20 bis 26 Gew.-%, mit m=2 in einer Menge von 25 bis 35 Gew-% und mit m = 1 in einer Menge von 45 bis 55 Gew.-% vorliegt, oder eine Verbindung d.2) gemäß Formel (II), worin n für eine ganze Zahl von 1 bis 4, vorzugsweise von 1 bis 2, besonders bevorzugt von 1 steht, und die Reste $R_6$, $R_7$, $R_8$, $R_9$ oder $R_{10}$ gleich sind und für ein H-Atom stehen.

Komponente d) kann in einer Menge von 1 bis 30 pphp (pphp = parts per hundred parts polyol), vorzugsweise von 5 bis 25 pphp und besonders bevorzugt von 8 bis 20 pphp eingesetzt werden.

<u>Komponente</u> e)

Als Komponente e) werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (III)

$$Q(NCO)_n \qquad (III)$$

in der

n = 2 - 4, vorzugsweise 2 - 3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen
bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Komponente e) mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird als Komponente e) ein Isomerengemisch aus 2,4- und 2,6-Toluylendiisocyanat eingesetzt. Besonders bevorzugt wird als Komponente e) ein Isomerengemisch aus 2,4- und 2,6-Toluylendiisocyanat im Gewichtsverhältnis von 80: 20 eingesetzt.

Der NCO-Gehalt der eingesetzten Komponente e) kann im Bereich von 15-54 %, vorzugsweise von 28 - 51 % und besonders bevorzugt von 47-49 % liegen.

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Kennzahl (Index) gibt das Verhältnis der tatsächlich eingesetzten Isocyanat-Menge zur stöchiometrischen, d.h. der für die Umsetzung der isocyanatreaktiven Komponenten berechneten Menge an Isocyanat-Gruppen (NCO-Menge) an. Sie wird wie folgt berechnet:

$$\text{Index (Kennzahl)} = [(\text{Isocyanat-Menge eingesetzt}) : (\text{Isocyanat-Menge berechnet})] \bullet 100 \qquad (IV)$$

Gemäß einer Ausführungsform erfolgt die Umsetzung der isocyanatreaktiven Komponenten A mit der Isocyanat-Komponente B bei einem Index von 50 bis 250, vorzugsweise bei einem Index von 90- 125.

Die nach dem erfindungsgemäßen Verfahren hergestellten Polyurethanschaumstoffe sind vorzugsweise Polyurethanweichschaumstoffe. Diese zeichnen sich neben den Flammschutzeigenschaften durch niedriges Emissionsverhalten aus. So beträgt der Foggingwert gemäß DIN 75201 B der erfindungsgemäß hergestellten Polyurethanschaumstoffe ≤ 0,70 mg. Die Gesamtsumme der Emissionen gemäß VDA 278 (VOC-Wert + FOG-Wert) liegt ≤ 1250 mg/kg.

Die erfindungsgemäß hergestellten Polyurethanschäume können unter anderem Verwendung in der Bauindustrie, Automobilindustrie und/oder Möbelindustrie finden.

## Beispiele

d-1: Tris(phenoxyethyl)phosphat
d- 2: Tris(tristyrylphenyl)phosphat
d- 3: Fyrol® PCF der Fa. ICL Industrial Products: Tris(2-chloroisopropyl)phosphate
d- 4: Phosflex® 71B der Fa. ICL Industrial Products: Mischung von butyliertem Triphenylphosphatester.
Polyetherpolyol a-1: DMC katalysiertes, auf Glycerin (90.2%) und Monopropylen Glycol (9.8%) gestartetes Polyetherpolyol mit 99 % Propylenoxid und 1% Ethylenoxid, einer OH-Zahl von 56 mg KOH/g.
c-1: Niax® L620 der Fa. Momentive Performance Chemicals, Deutschland (Katalysator)
c-2: Dabco® 33LV der Fa. Air Products, Deutschland (Katalysator)
c-3: Niax® A1 der Fa. Momentive Performance Chemicals, Deutschland (Katalysator)
c-4: Dabco® T-9 (Zinn-II-2-Ethylhexanoat) der Fa. Air Product, Deutschland (Katalysator)
e-1: Gemisch aus 2,4- und 2,6-TDI im Gewichtsverhältnis 80 : 20 und mit einem NCO-Gehalt von 48 Gew.-%.

Die Phosphorsäureester α-1, α-2 und α-3 wurden wie folgt hergestellt hergestellt:

*d-1: Tris(phenoxyethyl)phosphat*

In einer 101 Vierhalskolben-Rührapparatur werden unter einer trockenen Stickstoff-Atmosphäre 477,00 g Phenoxyethanol (3,45 mol) in 4,6 1 trockenem Toluol vorgelegt und auf 80 °C erwärmt. Über einen Tropftrichter werden 621,00 g Natriummethylat-Lösung (~30 Gew.-% in Methanol; 3,45 mol) zugetropft und der Tropftrichter mit 20 g trockenem

Methanol nachgespült. Über eine Destillationsbrücke werden 3,81 Methanol/Toluol bis zu einer Kopftemperatur von 110 °C abdestilliert. Während der Destillation wird zweimal je 11 trockenes Toluol nachdosiert. Nach dem Abkühlen der Reaktionsmischung auf 90 °C werden 500 ml trockenes Toluol nachdosiert und eine Lösung von 176,53 g Phosphorylchlorid (1,15 mol) in 400 ml trockenem Toluol zugetropft. Man läßt die Reaktionsmischung 4,5 h unter Rückfluß reagieren und anschließend auf Raumtemperatur abkühlen. Die erhaltene Lösung wird vom ausgefallenen Feststoff abfiltriert, auf zwei Scheidetrichter aufgeteilt und jeweils viermal mit 400 mL Wasser extrahiert. Nach dem Einengen bei 50 °C im Vakuum erhält man aus den vereinigten Toluol-Lösungen 278,0 g (53% d. Th.) der hochviskosen Zielverbindung.
$^{31}$P{$^{1}$H}-NMR (Toluol, 25 °C): -2,0 ppm [s]

*d-3: Tris(tristyrylphenyl)phosphat*

In einer 10 1 Vierhalskolben-Rührapparatur werden unter einer trockenen Stickstoff-Atmosphäre 669,20 g Tristyrylphenol (1,8 mol) in 4 1 trockenem Toluol vorgelegt und auf 80 °C erwärmt. Über einen Tropftrichter werden 324,00 g Natriummethylat-Lösung (~30 Gew.-% in Methanol; 1,8 mol) zugetropft und der Tropftrichter mit 20 g trockenem Methanol nachgespült. Über eine Destillationsbrücke werden 2,1 1 Methanol/Toluol bis zu einer Kopftemperatur von 110 °C abdestilliert. Nach dem Abkühlen der Reaktionsmischung auf 80 °C wird 1 1 trockenes Toluol nachdosiert und eine Lösung von 92,10 g Phosphorylchlorid (0,6 mol) in 500 mL trockenem Toluol zugetropft. Man läßt die Reaktionsmischung 1,5 h unter Rückfluß reagieren und anschließend auf Raumtemperatur abkühlen. Die erhaltene Lösung wird vom ausgefallenen Feststoff abfiltriert und in einem Scheidetrichter mit 100 ml 1 M HCl und anschließend viermal mit 200 ml Wasser extrahiert. Nach dem Einengen bei 50 °C im Vakuum erhält man aus der Toluol-Lösung 446,6 g (64% d. Th.) eines hochviskosen Rückstandes. Der Rückstand enthält ca. 23% Tris(tristyrylphenyl)phosphat, ca. 28% Bis(tristyrylphenyl)phosphat und ca. 49% Mono(tristyrylphenyl)phosphat.
$^{31}$P{$^{1}$H}-NMR (Toluol, 25 °C): -5,1 ppm [m, Mono(tristyrylphenyl)phosphat]; -7,6 ppm [m, Bis(tristyrylphenyl)phosphat] ; -14,8 ppm [m, Tris(tristyrylphenyl)phosphat]

Tristyrylphenol: Hersteller Fa. Tanatex Chemicals; Gemisch aus ca. 70% 2,4,6-Tristyrylphenol, ca. 25% 2,6-Distyrylphenol und Tetrastyrylphenol.

Unter den für die Herstellung von Polyurethanschaumstoffen üblichen Verarbeitungsbedingungen werden die Ausgangskomponenten gemäß Tabelle 1 im Einstufenverfahren mittels Blockverschäumung verarbeitet. Die Angaben der Einsatzstoffe (pphp) beziehen sich auf 100 Teile Polyetherpolyol b-1. In der Tabelle 1 angegeben ist die Kennzahl der Verarbeitung (danach ergibt sich die einzusetzende Menge an Komponente B im Verhältnis zu Komponente A). Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \quad \text{(IV)}$$

Die Rohdichte wurde bestimmt gemäß DIN EN ISO 3386-1-98.
Die Stauchhärte (CLD 40%) wurde bestimmt gemäß DIN EN ISO 3386-1-98 bei einer Verformung von 40%, 4. Zyklus.
Das Fogging wurde gravimetrisch gemäß DIN 75201B bestimmt.

Der VOC-Wert (Volatile Organic Compounds) in mg/kg (Toluol Equivalent) und FOG-Wert in mg/kg (Hexadecan Equivalent) wurde gemäß VDA 278 (Stand Oktober 2011) bestimmt.
Der Brandtest wurde gemäß der Richtlinie 95/28/EG durchgeführt.
$^{31}$P{$^{1}$H}-NMR wurde inToluol mit 85%iger wäßriger Phosphorsäure als externem Standard auf einem Bruker Spektrometer DPX 400 bei 25 °C gemessen.

| **Beispiel** | **Einheit** | **1** | **2** | **3 (Vgl.)** | **4(Vgl.)** | **5 (Vgl.)** |
|---|---|---|---|---|---|---|
| a-1 | pphp | 100 | 100 | 100 | 100 | 100 |
| Wasser | pphp | 3,5 | 3,5 | 3,5 | 3,5 | 3,5 |
| d-1 | pphp | 8,0 | | | | |
| d- 2 | pphp | | 8,0 | | | |
| d- 3 | pphp | | | 8,0 | | |
| d- 4 | | | | | | 8,0 |
| c-1 | pphp | 0,30 | 0,30 | 0,30 | 0,30 | 0,30 |
| c-2 | pphp | 0,24 | 0,24 | 0,24 | 0,24 | 0,24 |

(fortgesetzt)

| Beispiel | Einheit | 1 | 2 | 3 (Vgl.) | 4(Vgl.) | 5 (Vgl.) |
|---|---|---|---|---|---|---|
| c-3 | pphp | 0,04 | 0,04 | 0,04 | 0,04 | 0,04 |
| c-4 | pphp | 0,22 | 0,22 | 0,22 | 0,22 | 0,22 |
| Index | | 102 | 102 | 102 | 102 | 102 |
| e-1 | pphp | 43,54 | 43,54 | 43,54 | 43,54 | 43,54 |
| Rohdichte | $kg/m^3$ | 33,2 | 26,7 | 36,2 | 33,0 | 35,7 |
| Stauchhärte | kPa | 3,9 | 2,5 | 4,04 | 4,6 | 4,2 |
| Fogging DIN75201B | mg | 0,29 | 0,56 | 22,6 | 0,04 | 0,72 |
| VOC-Wert (VDA278) | mg/kg | 412 | 542 | 1256 | 160 | 496 |
| FOG-Wert (VDA278) | mg/kg | 99 | 632 | 3931 | 2 | 829 |
| Summe VOC-+FOG-Wert | mg/kg | 511 | 1174 | 5187 | 162 | 1325 |
| Brandtest Richtlinie 95/28/EG | bestanden | ja | ja | ja | nein | ja |
| (Vgl.): Vergleich | | | | | | |

Die erfindungsgemäßen Beispiele 1 und 2 weisen deutlich geringere Foggingwerte (gravimetrisch) im Vergleich zu Polyurethanschaumstoffen, die mit den herkömmlichen halogenhaltigen Flammschutzmitteln (Vergleichsbeispiel 3) bzw. mit butyliertem Triphenylphosphatester als Flammschutzmittel (Vergleichsbeispiel 5) hergestellt wurden. Weiterhin weisen die Polyurethanschaumstoffe, die mit den erfindungsgemäßen Flammschutzmitteln hergestellt wurden, deutlich weniger Emissionen an leicht und schwerflüchtigen organischen Bestandteilen (Summe VOC- und FOG-Wert nach VDA 278) auf.

## Patentansprüche

1. Verfahren zur Herstellung von Polyurethanschaumstoffen durch Umsetzung einer Komponente enthaltend

   a) mindestens eine gegenüber Isocyanaten reaktionsfähige Wasserstoffatome aufweisende Verbindung,
   b) Wasser und/oder physikalisches Treibmittel,
   c) Hilfs- und Zusatzstoffe,
   d) mindestens ein halogenfreies Flammschutzmittel umfassend

   d.1) einen Phosphorsäureester der Formel (I)

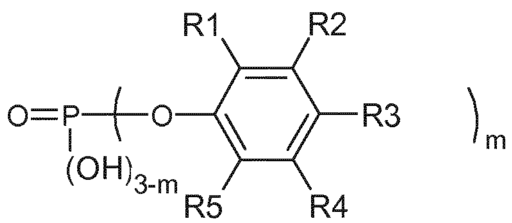

(I)

worin

m eine ganze Zahl von 1 bis 3 ist,
$R_1$, $R_2$, $R_3$, $R_4$, $R_5$ jeweils unabhängig von einander für H, einen $C_6$- bis $C_{12}$-Arylrest, einen $C_2H_2Ph$-Rest ("Styryl"), einen O-Alkylrest mit $C_1$ bis Cs-Kohlenstoffatomen, einen O-Arylrest mit $C_6$ bis $C_{12}$-Kohlenstoffatomen und/oder $COOR_{11}$ mit $R_{11}$ = $C_1$- bis $C_5$-Alkylrest stehen, und wobei mindestens einer der Reste $R_1$, $R_2$, $R_3$, $R_4$, $R_5$ verschieden von H ist;

oder

d.2) einen Phosphorsäureester der Formel (II)

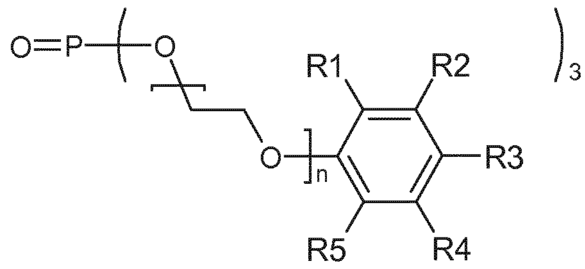

(II)

worin

n für eine ganze Zahl von 1 bis 4 steht,
$R_6$, $R_7$, $R_8$, $R_9$, $R_{10}$ jeweils unabhängig von einander für H, einen geradkettigen, verzweigten oder cyclischen $C_1$- bis $C_{10}$- Alkylrest, einen C6- bis $C_{12}$-Arylrest, einen $C_2H_2$Ph-Rest ("Styryl"), einen O-Alkylrest mit $C_1$ bis $C_3$-Kohlenstoffatomen, einen O-Arylrest mit $C_6$ bis $C_{12}$-Kohlenstoffatomen und/oder $COOR_{11}$ mit $R_{11}$ = $C_1$- bis Cs-Alkylrest stehen,

mit
e) mindestens einem Di- und/oder Polyisocyanat,
wobei die Mischung frei von halogenhaltigen Flammschutzmitteln ist.

**2.** Verfahren gemäß Anspruch 1, wobei die Komponente a) mindestens eine gegenüber Isocyanaten reaktionsfähige Wasserstoffatome aufweisende Verbindung mit einer Hydroxyl-Zahl gemäß DIN 53240 von ≥ 5 mg KOH/g bis ≤ 250 mg KOH/g umfasst.

**3.** Verfahren gemäß Anspruch 1 oder 2, wobei das halogenfreie Flammschutzmittel d) eine Verbindung d.1) gemäß Formel (I), wobei m = 3 ist, einer der Reste $R_1$, $R_2$, $R_3$, $R_4$ oder $R_5$ ein $C_6$- bis $C_{12}$-Arylrest, oder $C_2H_2$Ph-Rest ("Styryl") ist und die verbleibenden Reste für ein H-Atom stehen, oder wobei m eine ganze Zahl von 1 bis 3 ist und $R_1$, $R_3$ und $R_5$ gleich sind und für einen $C_6$- bis $C_{12}$-Arylrest oder für $C_2H_2$Ph-Rest ("Styryl") und $R_2$ und $R_4$ für H stehen, oder eine Verbindung d.2) gemäß Formel (II), worin n für eine ganze Zahl von 1 bis 4 steht, und einer der Reste $R_6$, $R_7$, $R_8$, $R_9$ oder $R_{10}$ ist ausgewählt aus der Gruppe bestehend aus H, geradkettigen, verzweigten oder cyclischen $C_1$- bis $C_{10}$-Alkylrest, einen $C_6$- bis $C_{12}$-Arylrest, einen $C_2H_2$Ph-Rest ("Styryl"), einen O-Alkylrest mit $C_1$ bis $C_5$-Kohlenstoffatomen, einen O-Arylrest mit $C_6$ bis $C_{12}$- Kohlenstoffatomen oder $COOR_{11}$ mit $R_{11}$ = $C_1$-bis Cs-Alkylrest, und die verbleibenden Reste $R_6$, $R_7$, $R_8$, $R_9$ oder $R_{10}$ für ein H-Atom stehen, umfasst.

**4.** Verfahren gemäß Anspruch 1 bis 3, wobei das halogenfreie Flammschutzmittel d) eine Verbindung d.1) gemäß Formel (I), wobei m eine ganze Zahl von 1 bis 3 ist, $R_1$, $R_3$ und $R_5$ gleich sind und für einen $C_6$-Arylrest oder für einen $C_2H_2$Ph-Rest ("Styryl") und $R_2$ und $R_4$ für H stehen, oder eine Verbindung d.2) gemäß Formel (II), worin n für eine ganze Zahl von 1 bis 4 steht, und einer der Reste $R_6$, $R_7$, $R_8$, $R_9$ oder $R_{10}$ ist ausgewählt aus der Gruppe bestehend aus H, geradkettigen, verzweigten oder cyclischen $C_1$- bis $C_6$- Alkylrest, einen $C_6$-Arylrest, einen $C_2H_2$Ph-Rest ("Styryl"), einen O-Alkylrest mit $C_1$ bis $C_3$-Kohlenstoffatomen, einen O-Arylrest mit $C_6$-Kohlenstoffatomen oder $COOR_{11}$ mit $R_{11}$ = $C_1$- bis $C_3$-Alkylrest, und die verbleibenden Reste $R_6$, $R_7$, $R_8$, $R_9$ oder $R_{10}$ für ein H-Atom stehen, umfasst.

**5.** Verfahren gemäß Anspruch 1 bis 4, wobei das halogenfreie Flammschutzmittel d) eine Verbindung d.1) gemäß Formel (I), wobei m eine ganze Zahl von 1 bis 3 ist, $R_1$, $R_3$ und $R_5$ gleich sind und, für einen $C_6$- bis $C_{12}$-Arylrest, bevorzugt $C_6$-Arylrest, oder $C_2H_2$Ph-Rest ("Styryl") und $R_2$ und $R_4$ für H stehen, oder eine Verbindung d.2) gemäß Formel (II), worin n für eine ganze Zahl von 1 bis 2, steht, einer der Reste $R_6$, $R_7$, $R_8$, $R_9$ oder $R_{10}$ ist ausgewählt aus der Gruppe bestehend aus H, O-Alkylrest mit $C_1$ bis Cs-Kohlenstoffatomen, vorzugsweise mit $C_1$ bis $C_3$-Kohlenstoffatomen, besonders bevorzugt mit $C_1$-Kohlenstoffatomen oder $COOR_{11}$ mit $R_{11}$ = $C_1$- bis Cs-Alkylrest, vorzugsweise $C_1$-bis $C_3$-Alkylrest, besonders bevorzugt $C_1$-Alkylrest und die verbleibenden Reste $R_6$, $R_7$, $R_8$, $R_9$ oder

$R_{10}$ für ein H-Atom stehen, umfasst.

**6.** Verfahren gemäß Anspruch 1 bis 5, wobei das halogenfreie Flammschutzmittel d) eine Verbindung d.1) gemäß Formel (I), wobei m eine ganze Zahl von 1 bis 3 ist, $R_1$, $R_3$ und $R_5$ gleich sind und für $C_2H_2$Ph-Rest ("Styryl") und $R_2$, $R_4$ für H stehen, oder eine Verbindung d.2) gemäß Formel (II), worin n für eine ganze Zahl von 1 bis 2 steht, und die Reste $R_6$, $R_7$, $R_8$, $R_9$ oder $R_{10}$ gleich sind und für ein H-Atom stehen.

**7.** Verfahren gemäß Anspruch 1 bis 6, wobei das halogenfreie Flammschutzmittel d) ein Gemisch von Verbindungen d.1) gemäß Formel (I), mit m= 1, m=2 und m=3, $R_1$, $R_3$ und $R_5$ gleich sind und für $C_2H_2$Ph-Rest ("Styryl") und $R_2$, $R_4$ für H stehen, oder eine Verbindung d.2) gemäß Formel (II), worin n für eine ganze Zahl von 1 bis 4, vorzugsweise von 1 bis 2, besonders bevorzugt von 1 steht, und die Reste $R_6$, $R_7$, $R_8$, $R_9$ oder $R_{10}$ gleich sind und für ein H-Atom stehen, umfasst.

**8.** Verfahren gemäß Anspruch 1 bis 7, wobei das halogenfreie Flammschutzmittel d) eine Verbindung d.1) gemäß Formel (I), wobei m eine ganze Zahl von 1 bis 3 ist, $R_1$, $R_3$ und $R_5$ gleich sind und für $C_2H_2$Ph-Rest ("Styryl") stehen und $R_2$, $R_4$ für H stehen, und wobei die Komponente d.1) als Gemisch von Verbindungen mit m=3 in einer Menge von 20 bis 26 Gew.-%, mit m=2 in einer Menge von 25 bis 35 Gew-% und mit m = 1 in einer Menge von 45 bis 55 Gew.-% vorliegt, oder eine Verbindung d.2) gemäß Formel (II), worin n für eine ganze Zahl von 1 bis 2 steht, und die Reste $R_6$, $R_7$, $R_8$, $R_9$ oder $R_{10}$ gleich sind und für ein H-Atom stehen, umfasst.

**9.** Verfahren gemäß Anspruch 1 bis 8, wobei auf 100 Gew.Teile. der Komponente a), Komponente b) in einer Menge von 0,5 bis 25 Gew.-Teilen, Komponente c) in einer Menge von 0,05 bis 10 Gew.-Teilen und Komponente d) in einer Menge von 1 bis 30 Gew.-Teilen. eingesetzt wird.

**10.** Verfahren gemäß Anspruch 1 bis 9, wobei die Herstellung des Polyurethan Schaumstoffs bei einem Index von 50 bis 250 erfolgt.

**11.** Verfahren gemäß Anspruch 1 bis 10, wobei als Komponente e) ein Isomerengemisch aus 2,4- und 2,6-Toluylendiisocyanat eingesetzt wird.

**12.** Flammgeschütze Polyurethanschaumstoffe erhältlich nach dem Verfahren gemäß Anspruch 1 bis 11.

**13.** Flammgeschütze Polyurethanschaumstoffe gemäß Anspruch 12, wobei der Polyurethanschaumstoff ein Polyurethan-Weichschaumstoff ist.

**14.** Verwendung der Polyurethanschaumstoffe gemäß Anspruch 12 oder 13 in der Automobil-, Bau- und/oder Möbelindustrie.

**15.** Flammschutzmittel umfassend

d.1) einen Phosphorsäureester der Formel (I)

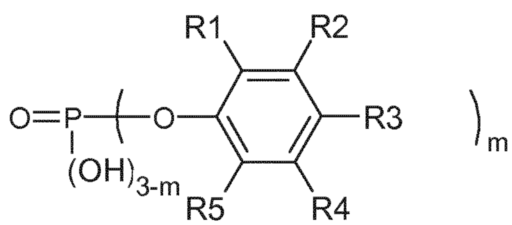

(I)

worin

m eine ganze Zahl von 1 bis 3 ist,
$R_1$, $R_2$, $R_3$, $R_4$, $R_5$ jeweils unabhängig von einander für H, einen $C_6$- bis $C_{12}$-Arylrest, vorzugsweise $C_6$-Arylrest, einen $C_2H_2$Ph-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis

$C_{12}$- Kohlenstoffatomen, vorzugsweise mit $C_6$- Kohlenstoffatomen, und/oder $COOR_{11}$ mit $R_{11}$ = $C_1$- bis $C_5$-Alkylrest, vorzugsweise $C_1$- bis $C_3$-Alkylrest, besonders bevorzugt $C_1$-Alkylrest, steht, und wobei mindestens einer der Reste $R_1$, $R_2$, $R_3$, $R_4$, $R_5$ verschieden von H ist,
oder

d.2) einen Phosphorsäureester der Formel (II)

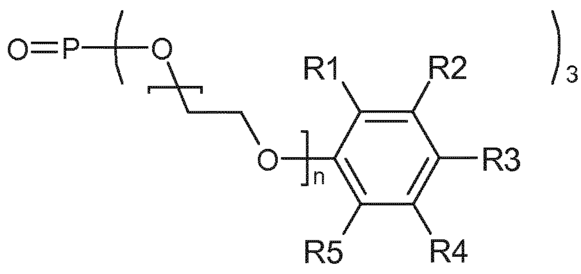

(II)

worin

n für eine ganze Zahl von 1 bis 4, vorzugsweise von 1 bis 2, besonders bevorzugt von 1,
$R_6$, $R_7$, $R_8$, $R_9$, $R_{10}$ jeweils unabhängig von einander für H, einen geradkettigen, verzweigten oder cyclischen $C_1$- bis $C_{10}$- Alkylrest, vorzugsweise $C_1$- bis $C_6$- Alkylrest, einen $C_6$- bis $C_{12}$-Arylrest, vorzugsweise $C_6$-Arylrest, einen $C_2H_2Ph$-Rest ("Styryl"), einen O-Alkylrest mit $C_1$ bis $C_5$-Kohlenstoffatomen, vorzugsweise mit $C_1$ bis $C_3$-Kohlenstoffatomen, besonders bevorzugt mit $C_1$-Kohlenstoffatomen, einen O-Arylrest mit $C_6$ bis $C_{12}$- Kohlenstoffatomen, vorzugsweise mit $C_6$- Kohlenstoffatomen, und/oder $COOR_{11}$ mit $R_{11}$ = $C_1$- bis $C_5$-Alkylrest, vorzugsweise $C_1$- bis $C_3$-Alkylrest, besonders bevorzugt $C_1$-Alkylrest, steht,

## Claims

1. Process for producing polyurethane foams by reacting a component comprising

a) at least one compound which comprises isocyanate reactive hydrogen atoms,
b) water and/or physical blowing agent,
c) auxiliary and additive substances,
d) at least one halogen-free flame retardant comprising

d.1) a phosphoric ester of formula (I)

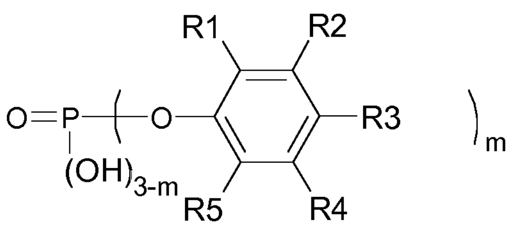

(I),

in which

m is an integer from 1 to 3,
$R_1$, $R_2$, $R_3$, $R_4$, $R_5$ each independently represent H, a $C_6$- to $C_{12}$-aryl radical, a $C_2H_2Ph$ radical ("styryl"), an O-alkyl radical having $C_1$ to $C_5$-carbon atoms, an O-aryl radical having $C_6$ to $C_{12}$-carbon atoms and/or $COOR_{11}$ where $R_{11}$ = $C_1$- to $C_5$-alkyl radical, and
wherein at least one of the radicals $R_1$, $R_2$, $R_3$, $R_4$, $R_5$ is distinct from H;

or

d.2) a phosphoric ester of formula (II)

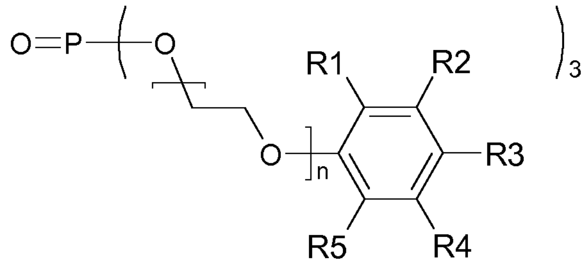

(II),

in which

n is an integer from 1 to 4,
$R_6$, $R_7$, $R_8$, $R_9$, $R_{10}$ each independently represent H, a straight-chain, branched or cyclic $C_1$- to $C_{10}$-alkyl radical, a $C_6$- to $C_{12}$-aryl radical, a $C_2H_2Ph$ radical ("styryl"), an O-alkyl radical having $C_1$ to $C_5$-carbon atoms, an O-aryl radical having $C_6$ to $C_{12}$-carbon atoms and/or $COOR_{11}$ where $R_{11}$ = $C_1$- to $C_5$-alkyl radical,

with
e) at least one di- and/or polyisocyanate,
wherein the mixture is free from halogen-containing flame retardants.

**2.** Process according to Claim 1, wherein component a) comprises at least one compound which comprises isocyanate-reactive hydrogen atoms and has a hydroxyl number according to DIN 53240 of ≥ 5 mg KOH/g to ≤ 250 mg KOH/g.

**3.** Process according to Claim 1 or 2, wherein the halogen-free flame retardant d) comprises a compound d.1) according to formula (I), wherein m = 3, one of the radicals $R_1$, $R_2$, $R_3$, $R_4$ or $R_5$ is a $C_6$- to $C_{12}$-aryl radical or $C_2H_2Ph$ radical ("styryl") and the remaining radicals represent an H atom, or wherein m is an integer of 1 to 3 and $R_1$, $R_3$ and $R_5$ are identical and represent a $C_6$- to $C_{12}$-aryl radical or $C_2H_2Ph$ radical ("styryl") and $R_2$ and $R_4$ represent H, or a compound d.2) according to formula (II), in which n represents an integer from 1 to 4 and one of the radicals $R_6$, $R_7$, $R_8$, $R_9$ or $R_{10}$ is selected from the group consisting of H, straight-chain, branched or cyclic $C_1$- to $C_{10}$- alkyl radical, a $C_6$- to $C_{12}$-aryl radical, a $C_2H_2Ph$ radical ("styryl"), an O-alkyl radical having $C_1$ to $C_5$-carbon atoms, an O-aryl radical having $C_6$ to $C_{12}$-carbon atoms or $COOR_{11}$ where $R_{11}$ = $C_1$- to $C_5$-alkyl radical, and the remaining radicals $R_6$, $R_7$, $R_8$, $R_9$ or $R_{10}$ represent an H atom.

**4.** Process according to Claims 1 to 3, wherein the halogen-free flame retardant d) comprises a compound d.1) according to formula (I), wherein m is an integer from 1 to 3, $R_1$, $R_3$ and $R_5$ identical and represent a $C_6$-aryl radical or a $C_2H_2Ph$ radical ("styryl") and $R_2$ and $R_4$ represent an H atom, or a compound d.2) according to formula (II), in which n represents an integer from 1 to 4 and one of the radicals $R_6$, $R_7$, $R_8$, $R_9$ or $R_{10}$ is selected from the group consisting of H, straight-chain, branched or cyclic $C_1$- to $C_6$-alkyl radical, a $C_6$-aryl radical, a $C_2H_2Ph$ radical ("styryl"), an O-alkyl radical having $C_1$ to $C_3$-carbon atoms, an O-aryl radical having $C_6$-carbon atoms or $COOR_{11}$ where $R_{11}$ = $C_1$- to $C_3$-alkyl radical, and the remaining radicals $R_6$, $R_7$, $R_8$, $R_9$ or $R_{10}$ represent an H atom.

**5.** Process according to Claims 1 to 4, wherein the halogen-free flame retardant d) comprises a compound d.1) according to formula (I), wherein m is an integer from 1 to 3, $R_1$, $R_3$ and $R_5$ are identical and represent a $C_6$- to $C_{12}$-aryl radical, preferably $C_6$-aryl radical, or $C_2H_2Ph$ radical ("styryl") and $R_2$ and $R_4$ represent H, or a compound d.2) according to formula (II), in which n represents an integer from 1 to 2, one of the radicals $R_6$, $R_7$, $R_8$, $R_9$ or $R_{10}$ is selected from the group consisting of H, O-alkyl radical having $C_1$ bis $C_5$-carbon atoms, preferably having $C_1$ to $C_3$-carbon atoms, particularly preferably having $C_1$-carbon atoms, or $COOR_{11}$ where $R_{11}$ = $C_1$- to $C_5$-alkyl radical, preferably $C_1$-to $C_3$-alkyl radical, particularly preferably $C_1$-alkyl radical, and the remaining radicals $R_6$, $R_7$, $R_8$, $R_9$ or $R_{10}$ represent an H atom.

6. Process according to Claims 1 to 5, wherein the halogen-free flame retardant d) comprises a compound d.1) according to formula (I), wherein m is an integer from 1 to 3, $R_1$, $R_3$ and $R_5$ are identical and represent $C_2H_2Ph$ radical ("styryl") and $R_2$, $R_4$ represent H, or a compound d.2) according to formula (II), in which n represents an integer from 1 to 2 and the radicals $R_6$, $R_7$, $R_8$, Rg or $R_{10}$ are identical and represent an H atom.

7. Process according to Claims 1 to 6, wherein the halogen-free flame retardant d) comprises a mixture of compounds d.1) according to formula (I), where m= 1, m=2 and m=3, $R_1$, $R_3$ and $R_5$ are identical and represent $C_2H_2Ph$ radical ("styryl") and $R_2$, $R_4$ represent H, or a compound d.2) according to formula (II), in which n represents an integer from 1 to 4, preferably from 1 to 2, particularly preferably 1, and the radicals $R_6$, $R_7$, $R_8$, $R_9$ or $R_{10}$ are identical and represent an H atom.

8. Process according to Claims 1 to 7, wherein the halogen-free flame retardant d) comprises a compound d.1) according to formula (I), wherein m is an integer from 1 to 3, $R_1$, $R_3$ and $R_5$ are identical and represent $C_2H_2Ph$ radical ("styryl") and $R_2$, $R_4$ represent H, and wherein component d.1) is in the form of a mixture of compounds where m=3 in an amount of 20 to 26 wt%, where m=2 in an amount of 25 to 35 wt% and where m = 1 in an amount of 45 to 55 wt%, or a compound d.2) according to formula (II), in which n represents an integer from 1 to 2 and the radicals $R_6$, $R_7$, $R_8$, $R_9$ or $R_{10}$ are identical and represent an H atom.

9. Process according to Claims 1 to 8, wherein per 100 parts by wt of component a), component b) is employed in an amount of 0.5 to 25 parts by wt, component c) is employed in an amount of 0.05 to 10 parts by wt and component d) is employed in an amount of 1 bis 30 parts by wt.

10. Process according to Claims 1 to 9, wherein production of the polyurethane foam is effected with an index of 50 to 250.

11. Process according to Claims 1 to 10, wherein an isomer mixture of 2,4- and 2,6-tolylene diisocyanate is employed as component e).

12. Flame-retarded polyurethane foams obtainable by the process according to Claims 1 to 11.

13. Flame-retarded polyurethane foams according to Claim 12, wherein the polyurethane foam is a flexible polyurethane foam.

14. Use of the polyurethane foams according to Claim 12 or 13 in the automobile, construction and/or furniture industries.

15. Flame retardant comprising

d.1) a phosphoric ester of formula (I)

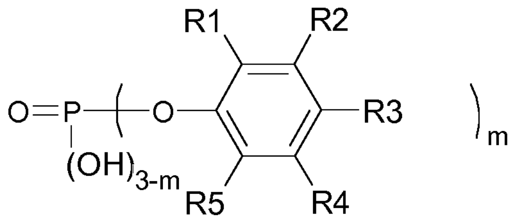

(I),

in which

m is an integer from 1 to 3,
$R_1$, $R_2$, $R_3$, $R_4$, $R_5$ each independently represent H, a $C_6$- to $C_{12}$-aryl radical, preferably $C_6$-aryl radical, a $C_2H_2Ph$ radical ("styryl"), an O-alkyl radical having $C_1$ to $C_5$-carbon atoms, preferably having $C_1$ to $C_3$-carbon atoms, particularly preferably having $C_1$-carbon atoms, an O-aryl radical having $C_6$ to $C_{12}$-carbon atoms, preferably having $C_6$- carbon atoms, and/or $COOR_{11}$ where $R_{11}$ = $C_1$- to $C_5$-alkyl radical, preferably $C_1$- to $C_3$-alkyl radical, particularly preferably $C_1$-alkyl radical, and wherein at least one of the radicals $R_1$, $R_2$, $R_3$, $R_4$, $R_5$ is distinct from H,
or

d.2) a phosphoric ester of formula (II)

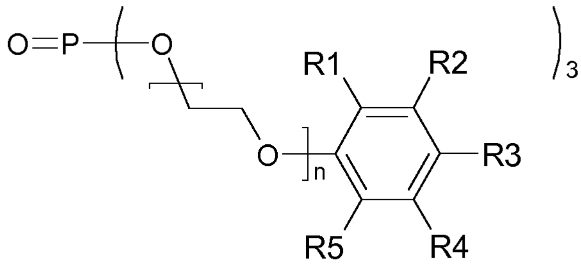

(II),

in which

n represents an integer from 1 to 4, preferably from 1 to 2, particularly preferably of 1,
$R_6$, $R_7$, $R_8$, $R_9$, $R_{10}$ each independently represent H, a straight-chain, branched or cyclic $C_1$- to $C_{10}$-alkyl radical, preferably $C_1$- to $C_6$-alkyl radical, a $C_6$-to $C_{12}$-aryl radical, preferably $C_6$-aryl radical, a $C_2H_2Ph$ radical ("styryl"), an O-alkyl radical having $C_1$ to $C_5$-carbon atoms, preferably having $C_1$ to $C_3$-carbon atoms, particularly preferably having $C_1$-carbon atoms, an O-aryl radical having $C_6$ to $C_{12}$-carbon atoms, preferably having $C_6$-carbon atoms, and/or $COOR_{11}$ where $R_{11}$ = $C_1$- to $C_5$-alkyl radical, preferably $C_1$- to $C_3$-alkyl radical, particularly preferably $C_1$-alkyl radical.

**Revendications**

**1.** Procédé pour la préparation de mousses de polyuréthane par transformation d'un composant contenant

a) au moins un composé présentant des atomes d'hydrogène réactifs vis-à-vis d'isocyanates,
b) de l'eau et/ou un agent gonflant physique,
c) des adjuvants et des additifs,
d) au moins un agent ignifugeant non halogéné comprenant

d.1) un ester d'acide phosphorique de formule (I)

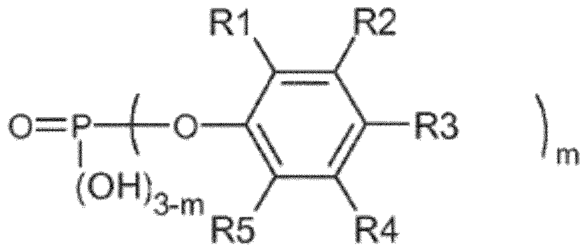

(I)

m étant un entier de 1 jusqu'à 3,
$R_1$, $R_2$, $R_3$, $R_4$, $R_5$ représentant, à chaque fois indépendamment les uns des autres, H, un radical $C_{6-12}$-aryle, un radical $C_2H_2Ph$ (« styryle »), un radical $C_{1-5}$-O-alkyle, un radical $C_{6-12}$-O-aryle et/ou $COOR_{11}$ avec $R_{11}$ = un radical $C_{1-5}$-alkyle et au moins un des radicaux $R_1$, $R_2$, $R_3$, $R_4$, $R_5$ étant différent de H ;
ou

d.2) un ester d'acide phosphorique de formule (II)

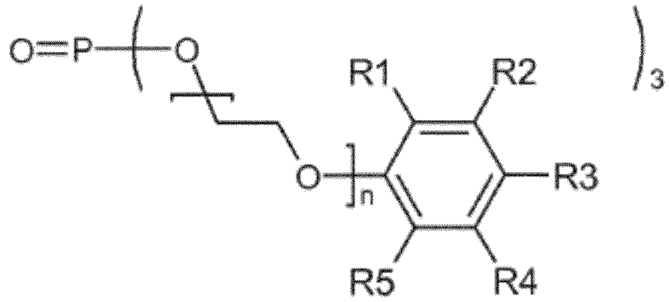

(II)

n étant un entier de 1 jusqu'à 4,

$R_6$, $R_7$, $R_a$, $R_9$, $R_{10}$ représentant, à chaque fois indépendamment les uns des autres, H, un radical $C_{1-10}$-alkyle linéaire, ramifié ou cyclique, un radical $C_{6-12}$-aryle, un radical $C_2H_2Ph$ (« styryle »), un radical $C_{1-5}$-O-alkyle, un radical $C_{6-12}$-O-aryle et/ou $COOR_{11}$ avec $R_{11}$ = un radical $C_{1-5}$-alkyle,

avec

e) au moins un diisocyanate et/ou au moins un polyisocyanate,

le mélange étant dépourvu d'agent ignifugeant halogéné.

**2.** Procédé selon la revendication 1, le composant a) comprenant au moins un composé présentant des atomes d'hydrogène réactifs vis-à-vis d'isocyanates doté d'un indice d'hydroxyle selon la norme DIN 53240 qui est ≥ 5 mg de KOH/g jusqu'à ≤ 250 mg de KOH/g.

**3.** Procédé selon la revendication 1 ou 2, l'agent ignifugeant non halogéné d) comprenant un composé d.1) selon la formule (I), avec m = 3, un des radicaux $R_1$, $R_2$, $R_3$, $R_4$ ou $R_5$ représentant un radical $C_{6-12}$-aryle ou un radical $C_2H_2Ph$ (« styryle ») et les radicaux restant représentant un atome de H ou alors m étant un entier de 1 jusqu'à 3 et $R_1$, $R_3$ et $R_5$ étant identiques et représentant un radical $C_{6-12}$-aryle ou un radical $C_2H_2Ph$ (« styryle ») et $R_2$ et $R_4$ représentant H ou un composé d.2) selon la formule (II), n étant un entier de 1 jusqu'à 4 et un des radicaux $R_6$, $R_7$, $R_8$, $R_9$ ou $R_{10}$ étant choisi dans le groupe constitué par H, un radical $C_{1-10}$-alkyle linéaire, ramifié ou cyclique, un radical $C_{6-12}$-aryle, un radical $C_2H_2Ph$ (« styryle »), un radical $C_{1-5}$-O-alkyle, un radical $C_{6-12}$-O-aryle et/ou $COOR_{11}$ avec $R_{11}$ = un radical $C_{1-5}$-alkyle, les radicaux restant $R_6$, $R_7$, $R_8$, $R_9$ ou $R_{10}$ représentant un atome d'H.

**4.** Procédé selon la revendication 1 à 3, l'agent ignifugeant non halogéné d) comprenant un composé d.1) selon la formule (I), m étant un entier de 1 jusqu'à 3, $R_1$, $R_3$ et $R_5$ étant identiques et représentant un radical $C_6$-aryle ou un radical $C_2H_2Ph$ (« styryle ») et $R_2$ et $R_4$ représentant H ou alors un composé d.2) selon la formule (II), n étant un entier de 1 jusqu'à 4 et un des radicaux $R_6$, $R_7$, $R_8$, $R_9$ ou $R_{10}$ étant choisi dans le groupe constitué par H, un radical $C_{1-6}$-alkyle linéaire, ramifié ou cyclique, un radical $C_6$-aryle, un radical $C_2H_2Ph$ (« styryle »), un radical $C_{1-3}$-O-alkyle, un radical $C_6$-O-aryle et/ou $COOR_{11}$ avec $R_{11}$ = un radical $C_{1-3}$-alkyle, les radicaux restant $R_6$, $R_7$, $R_8$, $R_9$ ou $R_{10}$ représentant un atome d'H.

**5.** Procédé selon la revendication 1 à 4, l'agent ignifugeant non halogéné d) comprenant un composé d.1) selon la formule (I), m étant un entier de 1 jusqu'à 3, $R_1$, $R_3$ et $R_5$ étant identiques et représentant un radical $C_{6-12}$-aryle, préférablement $C_6$-aryle ou alors un radical $C_2H_2Ph$ (« styryle ») et $R_2$ et $R_4$ représentant H ou un composé d.2) selon la formule (II), n étant un entier de 1 jusqu'à 2, un des radicaux $R_6$, $R_7$, $R_8$, $R_9$ ou $R_{10}$ étant choisi dans le groupe constitué par H, un radical $C_{1-5}$-O-alkyle, préférablement $C_{1-3}$-O-alkyle, particulièrement préférablement $C_1$-O-alkyle ou $COOR_{11}$ avec $R_{11}$ = un radical $C_{1-5}$-alkyle, préférablement $C_{1-3}$-alkyle, particulièrement préférablement $C_1$-alkyle et les radicaux restant $R_6$, $R_7$, $R_8$, $R_9$ ou $R_{10}$ représentant un atome d'H.

**6.** Procédé selon la revendication 1 à 5, l'agent ignifugeant non halogéné d) comprenant un composé d.1) selon la formule (I), m étant un entier de 1 jusqu'à 3, $R_1$, $R_3$ et $R_5$ étant identiques et représentant un radical $C_2H_2Ph$ (« styryle ») et $R_2$, $R_4$ représentant H ou alors un composé d.2) selon la formule (II), n étant un entier de 1 jusqu'à 2 et les radicaux $R_6$, $R_7$, $R_8$, $R_9$ ou $R_{10}$ étant identiques et représentant un atome d'H.

**7.** Procédé selon la revendication 1 à 6, l'agent ignifugeant non halogéné d) comprenant un mélange de composés d.1) selon la formule (I), avec m = 1, m = 2 et m = 3, $R_1$, $R_3$ et $R_5$ étant identiques et représentant un radical $C_2H_2Ph$ (« styryle ») et $R_2$ et $R_4$ représentant H ou alors un composé d.2) selon la formule (II), n étant un entier de 1 jusqu'à 4, préférablement de 1 jusqu'à 2, particulièrement préférablement n étant 1 et les radicaux $R_6$, $R_7$, $R_8$, $R_9$ ou $R_{10}$

étant identiques et représentant un atome d'H.

**8.** Procédé selon la revendication 1 à 7, l'agent ignifugeant non halogéné d) comprenant un composé d.1) selon la formule (I), m étant un entier de 1 jusqu'à 3, $R_1$, $R_3$ et $R_5$ étant identiques et représentant un radical $C_2H_2Ph$ (« styryle ») et $R_2$ et $R_4$ représentant H et le composant d.1) étant présent en tant que mélange de composés avec m = 3 en une quantité de 20 jusqu'à 26% en poids, avec m = 2 en une quantité de 25 jusqu'à 35% en poids et avec m = 1 en une quantité de 45 jusqu'à 5% en poids ou alors un composé d.2) selon la formule (II), n étant un entier de 1 jusqu'à 2 et les radicaux $R_6$, $R_7$, $R_8$, $R_9$ ou $R_{10}$ étant identiques et représentant un atome d'H.

**9.** Procédé selon la revendication 1 à 8, le composant b) étant utilisé en une quantité de 0,5 jusqu'à 25 parties en poids, le composant c) étant utilisé en une quantité de 0,05 jusqu'à 10 parties en poids et le composant d) étant utilisé en une quantité de 1 jusqu'à 30 parties en poids, pour 100 parties en poids du composant a).

**10.** Procédé selon la revendication 1 à 9, la préparation de la mousse de polyuréthane étant mise en oeuvre à un index de 50 jusqu'à 250.

**11.** Procédé selon la revendication 1 à 10, un mélange d'isomères de 2,4-diisocyanate et de 2,6-diisocyanate de toluylène étant utilisé comme composant e).

**12.** Mousses de polyuréthane ignifugées pouvant être obtenues selon le procédé selon la revendication 1 à 11.

**13.** Mousses de polyuréthane ignifugées selon la revendication 12, la mousse de polyuréthane étant une mousse flexible de polyuréthane.

**14.** Utilisation des mousses de polyuréthane selon la revendication 12 ou 13 dans l'industrie automobile, l'industrie de la construction et/ou l'industrie du meuble.

**15.** Agent ignifugeant comprenant

d.1) un ester d'acide phosphorique de formule (I)

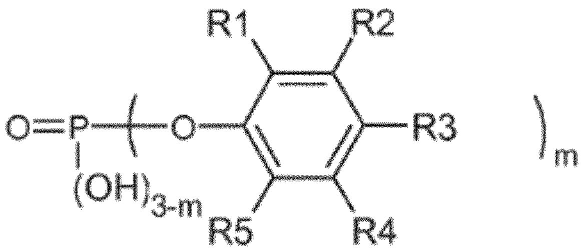

(I)

m étant un entier de 1 jusqu'à 3,
$R_1$, $R_2$, $R_3$, $R_4$, $R_5$ représentant à chaque fois indépendamment les uns des autres, H, un radical $C_{6-12}$-aryle, préférablement un radical $C_6$-aryle, un radical $C_2H_2Ph$ (« styryle »), un radical $C_{1-5}$-O-alkyle, préférablement $C_{1-3}$-O-alkyle, particulièrement préférablement $C_1$-O-alkyle, un radical $C_{6-12}$-O-aryle, préférablement $C_6$-O-aryle et/ou $COOR_{11}$ avec $R_{11}$ = un radical $C_{1-5}$-alkyle, préférablement $C_{1-3}$-alkyle, particulièrement préférablement $C_1$-alkyle et au moins un des radicaux $R_1$, $R_2$, $R_3$, $R_4$, $R_5$ étant différent de H ;
ou

d.2) un ester d'acide phosphorique de formule (II)

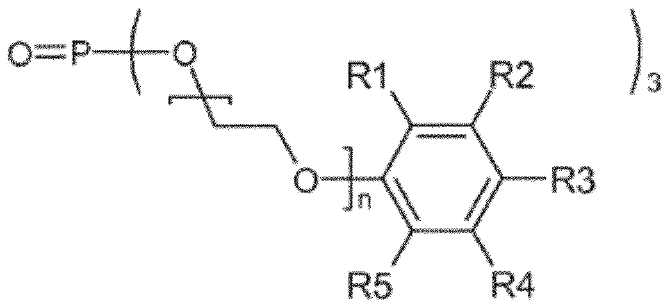

(II)

n étant un entier de 1 jusqu'à 4, préférablement de 1 jusqu'à 2, particulièrement préférablement n étant 1, $R_6$, $R_7$, $R_8$, $R_9$, $R_{10}$ représentant, à chaque fois indépendamment les uns des autres, H, un radical $C_{1-10}$-alkyle linéaire, ramifié ou cyclique, préférablement $C_{1-6}$-alkyle, un radical $C_{6-12}$-aryle, préférablement $C_6$-aryle, un radical $C_2H_2Ph$ (« styryle »), un radical $C_{1-5}$-O-alkyle, préférablement $C_{1-3}$-O-alkyle, particulièrement préférablement $C_1$-O-alkyle, un radical $C_{6-2}$-O-aryle, préférablement $C_6$-O-aryle et/ou $COOR_{11}$ avec $R_{11}$ = un radical $C_{1-5}$-alkyle, préférablement $C_{1-3}$-alkyle, particulièrement préférablement $C_1$-alkyle.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0170206 A
- EP 1785439 A
- US 20140179811 A
- EP 355000 A
- EP 0000389 A
- EP 0176013 A
- EP 0007502 A


### In der Beschreibung aufgeführte Nicht-Patentliteratur


- Kunststoff-Handbuch. Carl-Hanser-Verlag, 1993, vol. VII, 193-265
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1993, vol. VII, 139-265